# EUROPÄISCHE PATENTSCHRIFT

(11) **EP 1 530 771 B1**
(45) Veröffentlichungstag und Bekanntmachung des Hinweises auf die Patenterteilung: **10.12.2008**
(21) Anmeldenummer: 03792130.1
(22) Anmeldetag: 06.08.2003
(51) Int. Cl.: G06Q 10/00

(54) **VERFAHREN UND SYSTEM ZUM ÜBERMITTELN VON BENACHRICHTIGUNGEN AN NUTZER EINES LOGISTIKSYSTEMS**
METHOD AND SYSTEM FOR TRANSMITTING NOTIFICATIONS TO USERS OF A LOGISTIC SYSTEM
PROCEDE ET SYSTEME DE TRANSMISSION DE NOTIFICATIONS A DES UTILISATEURS D'UN SYSTEME DE LOGISTIQUE

(30) Priorität: 16.08.2002 DE 10238340
(43) Veröffentlichungstag der Anmeldung: 18.05.2005
(73) Patentinhaber: Deutsche Post AG, 53113 Bonn (DE)
(72) Erfinder: MAYER, Boris, 53129 Bonn (DE); SANTEL, Johannes, 53125 Bonn (DE)
(74) Vertreter: Jostarndt, Hans-Dieter
(86) Internationale Anmeldenummer: PCT/DE2003/002647
(87) Internationale Veröffentlichungsnummer: WO 2004/019241

(56) Entgegenhaltungen:
- EP-A- 0 491 367
- WO-A-02/50705
- US-A- 6 047 264
- US-B1- 6 220 509

## Beschreibung

Die Erfindung betrifft ein Verfahren zum Übermitteln von Benachrichtigungen an Nutzer eines Logistiksystems, bei dem das Logistiksystem eine oder mehrere Paketfachanlagen mit einem oder mehreren registrierten Nutzern umfasst, und bei dem Benachrichtigungsaufträge an eine zentralen Versendekomponente übermittelt werden, welche aufgrund der Aufträge dementsprechende Benachrichtigungen erzeugt und diese an die Nutzer versendet, wobei die Versendekomponente zur Erzeugung der Benachrichtigungen auf eine oder mehrere Datenbanken zugreift.

Die Erfindung betrifft ferner ein System zum Übermitteln von Benachrichtigungen an Nutzer eines Logistiksystems, das eine oder mehrere Paketfachanlagen betreibt.

Zum Betreiben eines Logistiksystems mit einer Vielzahl von Nutzern und einer oder mehrerer Logistikprovider ist die Übermittlung von bestimmten Informationen an die Teilnehmer des Systems erforderlich. Die Übermittlung von Informationen wird im Folgenden als Benachrichtigung bezeichnet. Derartige Benachrichtigungen können über einen oder mehrere verschiedene Kommunikationswege erfolgen.

Benachrichtigungen werden aufgrund von aufgetretenen Ereignissen innerhalb des Logistiksystems versendet. Dabei kann ein Ereignis des Logistiksystems keine, eine oder mehrere Benachrichtigungen auslösen. Die Zuordnung von Ereignissen des Logistiksystems zu Benachrichtigungen kann innerhalb einer Benachrichtigungskomponente in Abhängigkeit von einer Geschäftslogik durchgeführt werden.

Benachrichtigungen können auf verschiedenen Kommunikationswegen übermittelt werden. Der Kommunikationsweg stellt dabei die Art und Weise dar, wie eine Benachrichtigung zugestellt wird. Grundsätzlich kann eine Benachrichtigung mit demselben Informationsgehalt über mehrere Kommunikationswege zugestellt werden.

Insbesondere beim Betreiben einer Paketfachanlage für registrierte Nutzer durch ein Transport- und Zustellunternehmen ist ein Logistiksystem mit verschiedenen Benachrichtigungen und Kommunikationswegen erforderlich. Derartige Paketfachanlagen oder -automaten werden beispielsweise von einem Postunternehmen für registrierte Nutzer betrieben, für die von einem Zusteller Pakete oder sonstige Sendungen in einem Fach der Anlage deponiert werden. Der Nutzer muss daraufhin über die Deponierung eines Paketes für ihn benachrichtigt werden. Ferner muss das Logistiksystem beispielsweise darüber informiert werden, ob ein Nutzer sein Paket abgeholt hat. Innerhalb des Logistiksystems sind außerdem Informationen über die Registrierung neuer Kunden, Kundendaten, Abholfristen und Nachnahmebeträge auszutauschen.

Innerhalb eines Logistiksystems für Paketfachanlagen werden Benachrichtigungen typischerweise per Mail oder SMS versendet. Die Erzeugung, Verwaltung und Versendung der Benachrichtigungen beinhaltet vorzugsweise diverse Datenbanken und Verfahrensabläufe.

Bei der Verteilung von Gütern ist der Einsatz von Logistiksystemen bekannt. Bei den zu verteilenden Gütern kann es sich um verschiedenste Waren, Stoffe und Gegenstände handeln. Logistiksysteme dienen dazu, die Verteilung der betreffenden Güter beispielsweise zwischen Lagern, Zwischenlagern, Behältern, Fahrzeugen, Sendern und Empfängern über verschiedene Transportwege zu organisieren und zu überwachen. Die Funktionen von Logistiksystemen sind den Anforderungen zweckmäßigerweise so angepasst, dass die Verteilung der Güter beispielsweise im Hinblick auf Transportwege, Auslastung, Lagerzeiten und Datenübermittlung optimiert werden kann.

Von der Anmelderin werden insbesondere Logistiksysteme zur Verteilung von Brief- und Warensendungen (Päckchen, Pakete), Transportbehälter, Paletten und Containern eingesetzt. Dabei dienen die betreffenden Logistiksysteme vorzugsweise der Verteilung von Sendungen zwischen einem Sender und einem Empfänger, wobei beispielsweise Kriterien wie Transportschnelligkeit, Einsatz von Lagern und Fahrzeugen und die Übermittlung von Sendungsdaten von Bedeutung sind.

Aus dem Deutschen Gebrauchsmuster 201 03 564 U1 ist beispielsweise ein System zum Zustellen und Empfangen von Sendungen bekannt, das insbesondere für E-Commerce geeignet scheint. Das System umfasst mehrere automatische Ausgabemaschinen (ADM), in denen Sendungen deponiert und abgeholt werden. Das System beinhaltet ferner ein LAMIS-Server-Computerprogramm zur Handhabung von Operationen des Systems. Der Kunde wird beispielsweise über Kommunikationswege wie Mail für ihn an der ADM deponierte Sendungen informiert.

Die US-Patentschrift 6,047,264 offenbart ferner ein Verfahren zur Übermittlung des Status einer Sendung eines Nutzers, bei dem bei der Bestellung einer Sendung durch einen Nutzer ein Eintrag in einer zentralen Datenbank erzeugt wird. Ändert sich der Status der Sendung beispielsweise bei der Übergabe an ein Zustellunternehmen, dem Transport zu verschiedenen Stationen oder bei der Einlieferung am Zielort, wird die Statusänderung in der Datenbak erfasst. Diese Erfassung kann manuell oder elektronisch erfolgen. Eine Benachrichtigungskomponente fragt mittels eines Abfragemoduls kontinuierlich Statusänderungen in der Datenbank ab und erzeugt Nachrichten an den betreffenden Nutzer einer Sendung, für welche sich der Status geändert hat. Die Benachrichtigung erfolgt vorzugsweise per E-Mail.

Die internationale Patentanmeldung WO 02/50705 A1 beschreibt ein Verteilsystem für elektronische Dokumente wie E-Mails. Diese E-Mails beinhalten beispielsweise Anhänge zu Werbezwecken. Das System soll die Nachteile bestehender E-Mailsysteme verhindern, die beispielsweise darin bestehen, dass ein Sender keine Information darüber erhalten kann, ob ein Empfänger den Anhang einer E-Mail geöffnet hat, oder eine zum Öffnen einer Datei erforderliche Software beim Sender nicht vorhanden ist. Ferner sendet es statistische Informationen an den Sender, wenn ein Empfänger ein elektronisches Dokument geöffnet hat. Das System besteht im Wesentlichen aus einem Erzeugungsmodul, das aus einem Template und wählbaren Informationen eines Senders ein Masterdokument erzeugt. Das Masterdokument wird überprüft und einem Versendemodul übergeben, welche das Dokument an einen oder mehrere Empfänger versendet.

Die US-Patentschrift US 6,220,509 B1 offenbart ein Paketverfolgungssystem, bei dem Statusinformationen über eine Sendung direkt in die Datenbank eines Kunden geschrieben werden. Der Zugriff auf die Datenbank des Kunden erfolgt dabei vorzugsweise über eien Internetseite.

Die europäische Patentanmeldunge EP 0 491 367 A2 offenbart ein Verfahren zum Bearbeiten von Nachrichten, bei dem Aufträge in einer Warteschlange gespeichert werden, um gesteuert ausgeführt zu werden. Dabei können die Aufträge an verschiedene Bedingungen und Merkmale der Ziele und Kommunikationsverbindungen angepasst werden. Das Verfahren eignet sich insbesondere zum Einsatz in E-Mailsystemen.

Aufgabe der Erfindung ist es, ein Logistiksystem bereitzustellen, das eine möglichst flexible Reaktion auf verschiedene Ereignisse innerhalb des Logistiksystems und die Erzeugung von nutzerspezifischen Benachrichtigungen ermöglicht. Dabei soll das Logistiksystem den Betrieb von wenigstens einer elektronischen Paketfachanlage umfassen.

Erfindungsgemäß wird die Aufgabe durch den Gegenstand des unabhängigen Anspruches 1 gelöst. Vorteilhafte Ausführungsformen der Erfindung ergeben sich aus den Unteransprüchen 2 bis 3.

Erfindungsgemäß wird ein Logistiksystem mit einer oder mehreren Paketfachanlagen und mit einem oder mehreren registrierten Nutzern vorgeschlagen. Das Logistiksystem umfasst Module mit Funktionen zur Erzeugung von Benachrichtigungsaufträgen, eine zentrale Versendekomponente, einer Communication Request Queue, eine Vorlagendatenbank mit Templates zur Erzeugung von individuellen Benachrichtigungen für den jeweiligen Nutzer, eine Kundendatenbank mit Informationen zu Kunden, eine Paketdatenbank mit Informationen zu Paketen, eine Automatendatenbank mit Informationen zu Paketfachanlagen und ein Gateway zur Versendung der Benachrichtigungen. Das Logistiksystem ist so eingerichtet, dass verschiedene Ereignisse innerhalb des Logistiksystems verschiedene Module mit zugehörigen Funktionen aufrufen, um Benachrichtigungsaufträge zu erzeugen, die entweder zum direkten Versenden an die Versendekomponente oder zum zeitverzögerten Versenden in eine Communication Request Queue geschrieben werden. Ein Queue Reader liest die Benachrichtigungsaufträge timer-gesteuert aus der Communication Request Queue aus und übermittelt sie an die zentrale Versendekomponente, welche die entsprechenden benutzerspezifischen Benachrichtigungen erzeugt und diese über ein Gateway an die Nutzer versendet. Das Logistiksystem weist eine Delivery Contract Logic auf, die den Status der Benachrichtigungsaufträge vor Übergabe an die zentrale Versendekomponente validiert.

Die Aufgabe wird ferner durch ein System zur Durchführung des Verfahrens gelöst.

Die Module mit den jeweiligen Funktionen zur Reaktion auf Ereignisse innerhalb des Logistiksystems bilden ein externes Interface, durch das verschiedene Use Cases abgebildet werden. In einem besonders bevorzugten Ausführungsbeispiel der Erfindung werden die von den Modulen erzeugten Benachrichtigungsaufträge nur in speziellen Fällen direkt der Versendekomponente übermittelt, während sie in der Regel in eine Communication Request Queue eingeschrieben werden. Ein Queue Reader liest die Aufträge timer-gesteuert aus der Communication Request Queue aus und übermittelt sie der zentralen Versendekomponente. Dabei erfolgt zuvor eine Überprüfung des Status der Benachrichtigung. Eine Statusänderung kann beispielsweise dadurch erfolgen, dass ein Paket zwischenzeitlich abgeholt wurde oder sich der Abholer geändert hat.

Gemäß einem Aspekt der Erfindung erzeugt die Versendekomponente die Benachrichtigungen aufgrund von Daten aus einer oder mehrerer Datenbanken. Bei diesen Datenbanken handelt es sich zweckmäßigerweise wenigstens um eine Kundendatenbank, eine Paketdatenbank, eine Automatendatenbank und eine Vorlagendatenbank. Die Kundendatenbank enthält beispielsweise Daten über registrierte Kunden des Logistiksystems, wobei der jeweilige Kunde zur Identifizierung eine ID erhält. Diese Daten können Adressen, Telefonnummern oder Sonstiges beinhalten. Die Paketdatenbank enthält Informationen zu den Paketen, die innerhalb des Systems transportiert werden, wobei die Pakete ebenfalls über eine ID identifiziert sind. Die Automatendatenbank enthält Informationen zu den Paketfachanlagen, die innerhalb des Systems eingesetzt werden. Dies beinhaltet ebenfalls IDs.

Die Vorlagendatenbank enthält Templates zur Erzeugung von benutzerspezifischen Benachrichtigungen. Sie enthält dazu vorzugsweise Templates für Mail- und SMS-Benachrichtigungen. Die Templates weisen Platzhalter auf, in welche die benutzerspezifischen Daten aus den Datenbanken eingefügt werden.

Die erzeugten Benachrichtigungen werden von der Versendekomponente zur Versendung an die Nutzer an ein Gateway übermittelt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: die Verfahrensabläufe zwischen einem externen Interface, einer zentralen Versendekomponente und einer Communication Request Queue eines besonders bevorzugten Ausführungsbeispiels;
- Fig. 2: die Verfahrensabläufe zwischen einer Communication Request Queue, einer zentralen Versendekomponente und einer Delivery Contract Logic eines besonders bevorzugten Ausführungsbeispiels;
- Fig. 3: die Verfahrensabläufe zwischen einer zentralen Versendekomponente, verschiedenen Datenbanken und einem Gateway; und
- Fig. 4: eine Gesamtübersicht über die Abläufe innerhalb des Systems zur Übermittlung von Benachrichtigungen.

Im Folgenden wird ein Logistiksystem zum Betreiben eines Systems mit einer oder mehreren Paketfachanlagen mit einer variablen Anzahl registrierter Nutzer beschrieben. Dabei handelt es sich um ein besonders bevorzugtes Ausführungsbeispiel der Erfindung, das erfindungsgemäße Verfahren eignet sich jedoch auch für andere Logistiksysteme, in denen Benachrichtigungen versendet werden.

Das Logistiksystem zum Betreiben von einer oder mehrerer Paketfachanlagen teilt sich aufgrund der Funktionen beispielsweise in wenigstens folgende Bearbeitungsvorgänge auf:

| | |
|---|---|
| UC BNK1 | Bestätigung der Registrierung eines Kunden |
| UC BNK2 | Änderung der Kunden-Daten |
| UC BNK3 | Benachrichtigung 'Neues Paket' |
| UC BNK5 | Benachrichtigung 'Paket wurde abgeholt' |
| UC BNK6 | Benachrichtigung 'Paket wurde zurückgesendet' |
| UC BNK7 | Benachrichtigung 'Vertreter gesetzt' |
| UC BNK8 | Benachrichtigung 'Vertreter entfernt' |

Für die genannten Ereignisse innerhalb des Systems werden dem Nutzer Benachrichtigungen übersendet, die ihn über das Ereignis informieren und/oder es bestätigen. Die Ausführung der einzelnen Bearbeitungsvorgänge erfolgt in einem besonders bevorzugten Ausführungsbeispiel der Erfindung durch verschiedene Module und/oder Einheiten des Logistiksystems. Bei den Modulen kann es sich beispielsweise um eine Kundendatenbank, Registriereinheit oder Logistiksystem-Systemadministrationseinheit handeln. Die Module bilden gegebenenfalls zusammen mit anderen Komponenten ein externes Interface 10.

Der Ablauf und Funktionsaufruf innerhalb der Module wird im Folgenden erläutert. Die von den Modulen erzeugten Benachrichtigsaufträge werden entweder zum direkten Versenden an eine zentrale Versendekomponente 30 übergeben oder zum zeitversetzten Versenden in eine Communication Request Queue 40 eingelesen. Aus dieser Queue werden regelmäßig alle wartenden Benachrichtigsaufträge gelesen und entsprechende Benachrichtigungen versendet. Erzeugte Benachrichtigungen werden vorzugsweise als Mail oder SMS versendet.

### UC BNK1 Bestätigung der Registrierung

Nach der Registrierung eines neuen Kunden für das Logistiksystem der Paketfachanlagen ruft ein Registriermodul eine Funktion
newRecipient ( User ) zum Senden einer Bestätigungs-Benachrichtigung auf. Die Funktion bestimmt aus einer Mandantenlogik des dem Kunden zugeordneten Mandanten die nötigen Benachrichtigungen und trägt diese zum zeitversetzten Versenden in eine Communication Request Queue ein.

### UC BNK2 Änderung der Kunden-Daten

Nachdem ein Kunde seine hinterlegten Kundendaten in einer Kundendatenbank geändert hat, ruft die Kundendatenbank eine Funktion
updateRecipient ( User ) zum Senden einer Bestätigungs-Benachrichtigung auf. Diese Funktion bestimmt ebenfalls aus der Mandantenlogik eines dem Kunden zugeordneten Mandanten die nötigen Benachrichtigungen und trägt diese zum zeitversetzten Versenden in die CommunicationRequest-Queue ein.

### UC BNK3 Benachrichtigung 'Neues Paket'

Wird ein Paket an einem Logistiksystem-Paketautomaten eingeliefert, wird eine entsprechende Information an eine Logistiksystem-Systemadministrationseinheit gesendet. Die Logistiksystem-Systemadministrationseinheit ruft eine Funktion
notifyDelivery ( Parcel ) zum Senden einer Bestätigungs-Benachrichtigung auf. Die Funktion bestimmt aus der Mandantenlogik des dem Paket zugeordneten Mandanten die nötigen Benachrichtigungen und trägt diese in die CommunicationRequest-Queue zum zeitversetzten Versenden ein.

### UC BNK5 Benachrichtigung 'Paket wurde abgeholt'

Wenn ein Paket aus einem Logistiksystem-Paketautomaten abgeholt wurde, wird eine entsprechende Information an die Logistiksystem-Systemadministrationseinheit gesendet. Die Logistiksystem-Systemadministrationseinheit ruft daraufhin eine Funktion
notifyPickup ( Parcel ) zum Senden einer Bestätigungs-Benachrichtigung auf. Die Funktion bestimmt aus der Mandantenlogik des dem Paket zugeordneten Mandanten die nötigen Benachrichtigungen und trägt diese in die CommunicationRequest-Queue ein.

### UC BNK6 Benachrichtigung 'Paket wurde zurückgesendet'

Wenn ein Paket aus einem Logistiksystem-Paketautomaten zurückgesendet wurde, weil es innerhalb einer bestimmten Abholfrist nicht abgeholt wurde, wird eine entsprechende Information an die Logistiksystem-Systemadministrationseinheit gesendet. Die Logistiksystem-Systemadministrationseinheit ruft eine Funktion
parcelFailed ( Parcel ) zum Senden einer Bestätigungs-Benachrichtigung auf. Die Funktion bestimmt aus der Mandantenlogik des dem Paket zugeordneten Mandanten die nötigen Benachrichtigungen und trägt diese in die CommunicationRequest-Queue ein.

### UC BNK7 Benachrichtigung 'Vertreter gesetzt'

Wenn für ein wartendes Paket in einem Logistiksystem-Paketautomaten ein Vertreter gesetzt wurde, wird eine entsprechende Information an die Logistiksystem-Systemadministrationseinheit gesendet. Die Logistiksystem-Systemadministrationseinheit ruft daraufhin eine Funktion
addSubstitute ( Parcel, User ) zum Senden einer Bestätigungs-Benachrichtigung auf. Die Funktion bestimmt aus der Mandantenlogik des dem Paket zugeordneten Mandanten die nötigen Benachrichtigungen und trägt diese in die CommunicationRequest-Queue ein.

### UC BNK8 Benachrichtigung 'Vertreter entfernt'

Wenn für ein wartendes Paket in einem Logistiksystem-Paketautomaten ein gesetzter Vertreter entfernt wurde, wird eine entsprechende Information an die Logistiksystem-Systemadministrationseinheit gesendet. Die Logistiksystem-Systemadministrationseinheit ruft eine Funktion
removeSubstitute ( Parcel , User )
zum Senden einer Bestätigungs-Benachrichtigung auf. Die Funktion bestimmt aus der Mandantenlogik des dem Paket zugeordneten Mandanten die nötigen Benachrichtigungen und trägt diese in die CommunicationRequest-Queue ein.

Zusätzlich können beispielsweise folgende Ereignisse durch Funktionen innerhalb von Modulen abgebildet werden:

| | |
|---|---|
| **Paketautomat nicht funktionstüchtig** | notifyADMFailed ( Parcel parcel, boolean failure) |
| **Generische Benachrichtigung** | genericNotification ( Parcel parcel, Addressable add, int type ) |
| **Benachrichtigung an Zustellunternehmen: Paket eingeliefert** | notifyDeliveryProvider ( Parcel parcel ) |
| **Benachrichtigung an Zustellunternehmen: Paket entnommen** | notifyPickupProvider ( Parcel parcel ) |
| **Filiale** | notifyFiliale ( String description, DeliveryMachine adm, Addressable recipient, boolean filialeCODParcel) |
| **Warenschleuse** | notifyWarehouseDelivery ( String description, DeliveryMachine adm, Addressable recipient) |
| **Adressenprüfung fehlgeschlagen** | notifyAdressCheckFailed (String description, Addressable recipient) |
| **Internet-Passwort** | notifyInternetPassword (String description, Addressable recipient) |
| **Generischer Nachrichtentext** | notifyGenericMessageText (String description, Addressable recipient) |
| **Delivery-Retourenprovider** | notifyDeliveryRetoureProvider ( Parcel parcel ) |
| **Fickup-Retourenprovider** | notifyPickupRetoureProvider ( Parcel parcel ) |
| **Pickup durch DeliveryAgent-Provider** | notifyPickupByDeliveryAgentProvider ( Parcel parcel ) |
| **Änderung E-Mail** | notifyEmailChanged (Addressable recipient) |
| **Änderung Mobiltelefonnummer** | notifyMobileNumberChanged (Addressable recipient) |
| **Änderung Postpin** | notifyPostPinChanged (Addressable recipient) |
| **Änderung Passwort** | notifyInternetPasswordChanged (Addressable recipient) |

Benachrichtigungen werden vorzugsweise in Mail- oder SMS-Form versendet. Dazu kann beispielsweise ein Mail- und SMS-Gateway eingesetzt werden.

Zum Einsatz des erfindungsgemäßen Verfahrens in der Praxis hat es sich als zweckmäßig erwiesen, dass die Liste der nicht versendbaren Benachrichtigungen regelmäßig (z.B. alle 24h) manuell nachbearbeitet wird.

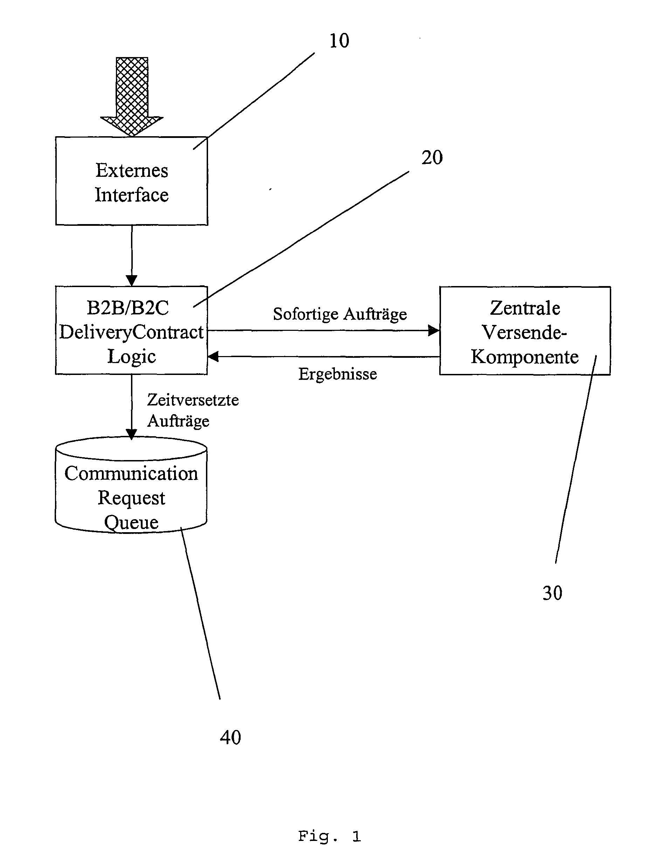

Die Abbildungen in den Figuren 1 bis 4 zeigen eine Übersicht über die wichtigsten Teilkomponenten eines besonders bevorzugten Ausführungsbeispiels des erfindungsgemäßen Systems. Die externen Systeme sind schraffiert gekennzeichnet, während die zum Benachrichtigungssystem gehörenden Teile weiß dargestellt sind.

Der Abbildung in Fig. 1 ist der Aufbau eines besonders bevorzugten Ausführungsbeispiels einer Benachrichtigungskomponente zu entnehmen. Die Benachrichtigungskomponente steht in Verbindung mit einem externen Interface 10, das von außen bei bestimmten eingetretenen Ereignissen des Logistiksystems aufgerufen wird. Das Interface wird durch mehrere Module mit jeweiligen Funktionen gebildet. Die Ereignisse des Logistiksystems werden über eine nicht dargestellte B2B Accountlogic-Komponente in Benachrichtigungsaufträge umgesetzt. Für bestimmte Spezialfälle können diese Aufträge direkt über eine zentrale Versendekomponente 30 versendet werden. Standardmäßig werden die Aufträge jedoch in eine Communication-Request-Queue 40 geschrieben und von dort timer-gesteuert an die Versendekomponente 30 übergeben. Dies erlaubt z.B. die Definition von Erinnerungs-Benachrichtigungen zu späteren Zeitpunkten (z.B. nach 2 Tagen oder 7 Tagen). Das Schreiben in die Queue hat außerdem den Vorteil, dass hier ein automatisches Wiederholen von fehlgeschlagenen Sendungen erfolgt.

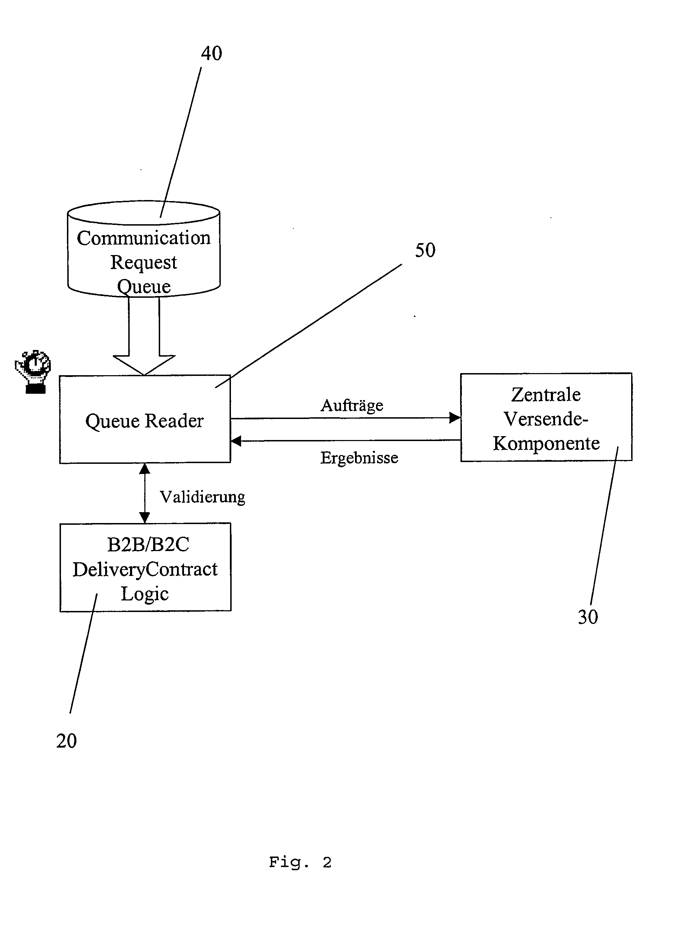

Der Abbildung in Fig. 2 ist der Verfahrensablauf nach Einschreibung der Benachrichtigungsaufträge in die Communication-Request-Queue 40 zu entnehmen. Die in der Communication-Request-Queue 40 stehenden Aufträge werden timer-gesteuert von einem Queue-Reader 50 ausgelesen. Es wird nochmals gegen eine B2B Delivery Contract-Logic 20 überprüft, ob sich der Status zwischenzeitlich geändert hat. Eine Statusänderung erfolgt beispielsweise dadurch, dass ein deponiertes Paket abgeholt wurde oder sich der Abholer geändert hat. Falls die Validierung erfolgreich war, wird zur Versendung ein CommunicationRequest an die Versende-Komponente 30 übergeben.

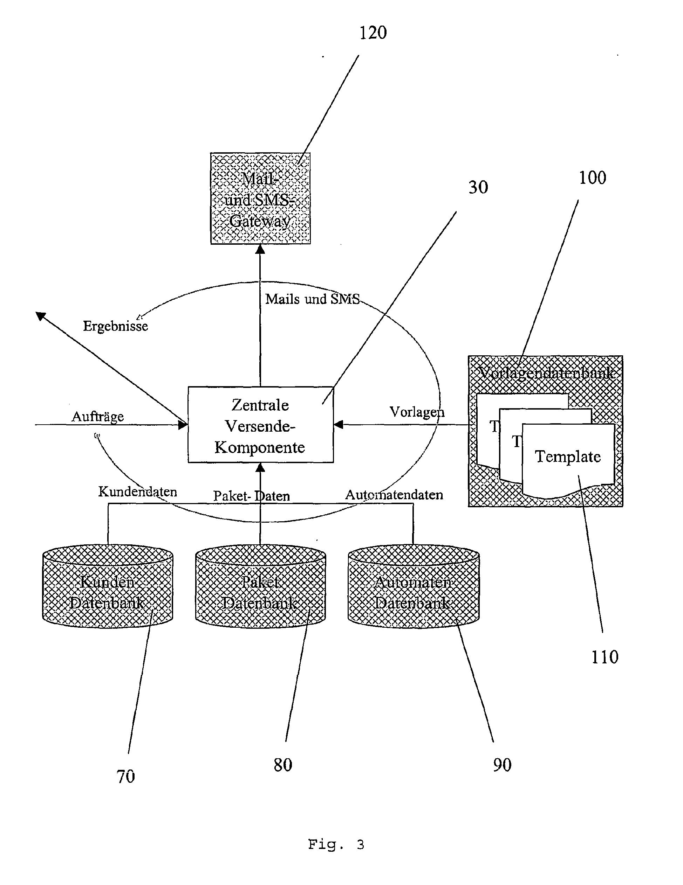

In der Abbildung in Fig. 3 ist der Verfahrensablauf im Zusammenhang mit der zentralen Versendekomponente 60 dargestellt. Der Prozessfluss innerhalb der Versende-Komponente wird durch Pfeile dargestellt. Die Versende-Komponente erhält von außen Aufträge und liest daraufhin die notwendigen Daten zum Übermitteln der Benachrichtigung aus den angeschlossenen Datenbanken. Bei den Datenbanken handelt es sich wenigstens um eine Kundendatenbank 70, eine Paketdatenbank 80 und eine Automatendatenbank 90. Die Automatendatenbank enthält Daten zu den Paketfachanlagen des Systems. Danach wird ein von der B2B-Komponente 20 vorgegebenes Template 110 aus der Vorlagedatenbank 100 gelesen und Platzhalter innerhalb des Templates durch die aktuellen Daten ersetzt. Die so erzeugte Mail oder SMS kann beispielsweise über ein Mail- und SMS-Gateway 120 versendet werden.

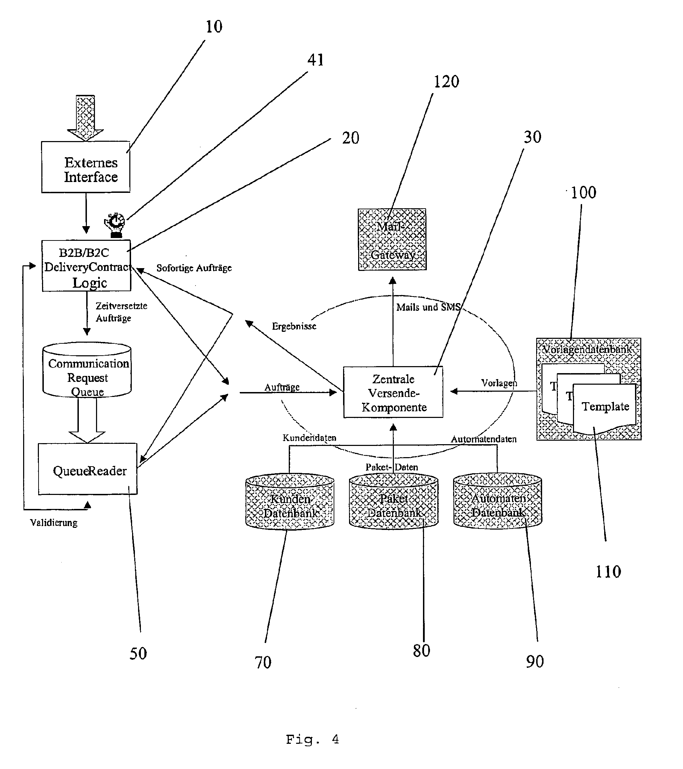

In der Abbildung der Fig. 4 werden die drei Teile der Benachrichtigungskomponente zu einer gemeinsamen Übersicht zusammengefasst. Dabei sieht man deutlich die Trennung zwischen der zentralen Versendekomponente 30 auf der rechten Seite und den Teilen der Geschäftslogik-Komponente auf der linken Seite.

Im Folgenden werden die einzelnen Komponenten des Systems und ihre Funktion innerhalb eines besonders bevorzugten Ausführungsbeispiels des erfindungsgemäßen Verfahrens näher erläutert.

### Externes Interface

Das externe Interface 10 steht in Verbindung mit der Benachrichtigungskomponente und ergibt sich straightforward aus verschiedenen Use Cases: für jeden Use Case ist vorzugsweise eine eigene Funktion definiert, die innerhalb der Benachrichtigungskomponente die benötigte Funktionalität realisiert. Diese Funktionen entsprechen den Ereignissen des Logistiksystems und betreffen beispielsweise Paket(parcel)- und/oder Benutzer(user)objekte. Die Funktionen können selbstverständlich erweitert werden und auch andere Objekte betreffen.
newRecipient ( User )
wird nach der Registrierung eines neuen Kunden aufgerufen.
updateRecipient ( User )
wird aufgerufen, nachdem ein Kunde seine hinterlegten Kundendaten in der Kundendatenbank geändert hat.
notifyDelivery ( Parcel )
wird aufgerufen, wenn ein Paket in einem Logistiksystem-Paketautomaten eingeliefert wurde.
notifyPickup ( Parcel )
wird aufgerufen, wenn ein Paket aus einem Logistiksystem-Paketautomaten abgeholt wurde.
notifyPickup ( Parcel )
wird aufgerufen, wenn ein Paket aus einem Logistiksystem-Paketautomaten abgeholt wurde.
parcelFailed ( Parcel )
wird aufgerufen, wenn ein Paket aus einem Logistiksystem-Paketautomaten zurückgesendet wurde, weil es innerhalb einer bestimmten Abholfrist nicht abgeholt wurde.
addSubstitute ( Parcel, User )
wird aufgerufen, wenn für ein in einem Logistiksystem-Paketautomaten wartendes Paket ein Vertreter gesetzt wurde.
removeSubstitute ( Parcel, User )
wird aufgerufen, wenn für ein in einem Logistiksystem-Paketautomaten wartendes Paket ein gesetzter Vertreter entfernt wurde.

Die betroffenen Paket- oder Benutzer-Objekte erhalten jeweils Methoden. Intern wird das Ereignis des Logistiksystems in Benachrichtigungen umgesetzt, die in der internen Queue 40 zwischengespeichert werden. Die Methoden liefern als Ergebnis zurück, ob diese Umsetzung und Zwischenspeicherung funktioniert hat oder nicht.

### Template-Mechanismus

### Benötigte Templates

Es können verschiedene Arten von Benachrichtigungen versendet werden, für die es sich als zweckmäßig erwiesen hat, Templates 110 zu erstellen und diese in einer Vorlagendatenbank zu speichern. Die Benachrichtigungsarten werden über einen Template-Namen abgebildet, der die Templates auf der Ebene des Informationsgehalts der Benachrichtigung klassifiziert. Für den B2C-Fall werden beispielsweise folgende Templates benötigt:

| | |
|---|---|
| Neukunden-Registrierung | BNK1 |
| Kundendaten-Änderung | BNK2 |
| Paketeinlieferung | BNK3, BNK3N |

### Paket wartet seit 48 h BNK4, BNK4N

| | |
|---|---|
| Paket wird in 48 Stunden zurückgeschickt | BNK5, BNK5N |

Für die drei letzten Arten von Paket-Benachrichtigungen können Template-Varianten für Pakete mit Nachnahme und Pakete ohne Nachnahme verwendet werden. Neben dem Namen werden die Templates weiter über den DeliveryContract, den Kommunikationsweg und die Sprache identifiziert. Neben den beschriebenen Templates können selbstverständlich beliebig viele weitere Templates verwendet werden.

Für sämtliche Benachrichtigungen sollten Templates sowohl für den SMS- als auch für den Mail-Versand vorliegen. Für den Mail-Versand werden vorzugsweise Templates sowohl für den Nachrichten-Text, als auch für die Betreff-Zeile benötigt.

### Datenbank-Ablage

Zur einfacheren Pflege der Templates 110 werden diese in einer Datenbank 100 abgelegt. In einem besonders bevorzugten Ausführungsbeispiel der Erfindung umfasst diese Datenbank mehrere Felder, die im Folgenden tabellarisch dargestellt sind:

| **Feld** | **Beschreibung** | **Typ** | **Beispiel** |
|---|---|---|---|
| Contract | ID des Delivery- VARCHAR(16) Contracts, des Logistik-Partners oder Logistik-Providers | | LC_4711, LP_4712 DC_4713 |
| CommType | Kommunikationsweg | VARCHAR(12) | SMS, PlainText, MailHeader, später evt. HTMLMail, Pager, FAX |
| Notificatio n | Art der Benachrichtigung, siehe Abschnitt 0 | VARCHAR(12) | BNK1, BNK2, BNK3 BNK3N, BNK4, BNK4N, BNK5, BNK5N |
| Lang | Sprache | VARCHAR(5) | de-DE, en-US |
| Template Text | Abgelegter Template-Text | VARCHAR(2048) | |

Zu beachten ist, dass der Datenbank-Key 'Contract' in Abhängigkeit vom Ereignis des Logistiksystems zur Benachrichtigung ein Logistik-Provider bzw. ein LogistikContractor (bei BNK1 und BNK2) oder auch ein DeliveryContract (bei BNK3 - BNK 5) sein kann.

### Platzhalter-Mechanismus

Es hat sich als zweckmäßig erwiesen, innerhalb der Templates 110 verschiedene Platzhalter zu benutzen, um konkrete Informationen zu ersetzen. Im Hinblick auf eine Verwendung von HTML-formatierten Mails sollten diese Platzhalter zweckmäßigerweise nicht als HTML-Tags definiert werden.

Es können wenigstens folgenden Platzhalter vorgesehen sein:

| | |
|---|---|
| >M_NR< | Ereignis des Logistiksystems-Kundennummer |
| >M_Adresse< | Anrede |
| >M_FirstName< | Vorname |
| >M_SurName< | Nachname |
| >M_SMS< | SMS-Nummer des Kunden |
| >M_Mail< | eMail-Adresse des Kunden |
| >M_Street< | Strasse und Hausnummer des Kunden |
| >M_ZipCode< | Postleitzahl des Kunden |
| >M_City< | Ortsname des Kunden |
| | |
| >AUT_Street< | Strasse und Hausnummer des Automaten |
| >AUT_ZipCode< | Postleitzahl des Automaten |
| >AUT_City< x | >AUT_City< Ortsname des Automaten |
| | |
| >POD_Amount< | Nachnahme-Betrag und Währung |

Neben den beschriebenen Platzhaltern können selbstverständlich weitere Platzhalter verwendet werden.

### Nachrichtenlänge

Die maximale Länge bei SMS-Nachrichten beträgt typischerweise 160 Zeichen. Da gewisse Informationen wie der Standort des Ereignisses des Logistiksystem-Automaten variable Längen haben, können überlange Felder (z.B. Strassen oder Orte mit Stadtteil-Angaben) zum 'Überlaufen' der 160 Zeichen führen. Zur Vermeidung eines derartigen 'Überlaufens' wird in einem besonders bevorzugten Ausführungsbeispiel der Erfindung ein intelligenter Mechanismus eingesetzt, der in Abhängigkeit der einzelnen Feldlängen, der Wichtigkeit des jeweiligen Feldes und der verfügbaren Restlänge, möglichst alle wesentlichen Informationen erhält.

Eine Alternative zu einem intelligenten Mechnaismus stellt die Ablage von Kurz-Versionen aller Felder in den entsprechenden Datenbanken dar, so dass die Maximallänge von 160 Zeichen nie überschritten wird. Dies hat aber den Nachteil, dass sich ändernde SMS-Templates neue Längenbeschränkungen mit sich bringen. So können gewisse Informationen wie die vom Kunden eingegebene Anschrift nicht leicht angepasst werden.

### B2B DeliveryContract-Logik

Die B2B DeliveryContract-Logik 20 legt fest, wie für einen bestimmten Logistik-Provider, einen bestimmten LogistikContractor, und einen bestimmten DeliveryContract (zwischen einem bestimmten Logistik-Provider und einem bestimmten Logistik-Contractor) die individuelle Geschäftslogik aussehen soll. Hierzu werden die einzelnen Ereignisse in Benachrichtigungsaufträge umgesetzt. Die Ereignisse des Logistiksystems newRecipient und updateRecipient sind nur vom LogistikProvider bzw. LogistikContractor abhängig, denen der entsprechende Benutzer zugeordnet ist. Die anderen Ereignisse des Logistiksystems stehen im Zusammenhang mit der Auslieferung von Paketen, hängen also sowohl vom LogistikProvider (der das Paket transportiert) als auch von dem LogistikContractor (der den Empfänger bzw. Einlieferer des Pakets definiert) ab. Zur Umsetzung der Logik wird für jedes Ereignis des Logistiksystems eine Liste von zu sendenden Benachrichtigungen (Communication Requests) definiert. Diese enthalten mehrere Parameter, die eingestellt werden können.

### Ereignis des Logistiksystems

Zu jedem Ereignis können mehrere Benachrichtigungen hinterlegt sein, wenn z.B. mehrfache wiederholte Benachrichtigungen erfolgen, oder mehrere Personen mit unterschiedlichen Rollen informiert werden sollen.

Zu informierende Personen sind diejenigen Personen, die benachrichtigt werden sollen. Mögliche Werte sind: *Empfänger, Vertreter, LogistikProvider oder LogistikContractor*

Es wird ein Datum festgelegt, an dem die Benachrichtigung versendet werden soll. In der Logik wird nur ein relatives Datum abgelegt, dieses wird dann mit dem Datum des Ereignisses des Logistiksystems zu einem absoluten Datum verrechnet. Mögliche Werte dazu sind beispielsweise:

| | |
|---|---|
| **Sofort** | die Versendung der Benachrichtigung erfolgt sofort |
| + **X Zeiteinheiten** | die Versendung erfolgt in X Zeiteinheiten |
| - **X Zeiteinheiten** | die Versendung erfolgt X Zeiteinheiten vor Ablauf des Pakets. |

Es kann ein bestimmter Kommunikationsweg vorgegeben werden. Dies wird z.B. benötigt, wenn eine bestimmte Logik nur Benachrichtigungen per SMS vorsieht. Mögliche Werte sind *Mail, SMS* und *User* (der beim Benutzer angegebene Kommunikationsweg.) Hierdurch kann z.B. eine Delivery-Contract-Logik abgebildet werden, die Benachrichtigungen ausschließlich über einen bestimmten Kommunikationsweg erlaubt.

Vorzugsweise besteht die Möglichkeit der Wahl eines Templates 110, das zur Übermittlung genutzt werden soll. Dies hat den Vorteil, dass verschiedene Texte innerhalb desselben Delivery-Contracts nutzbar gemacht werden können, z.B. für verschiedene Ereignisse des Logistiksystems. Das Template wird zusätzlich immer durch den aktuellen Delivery-Contract eingeschränkt. Ein bestimmtes Template (z.B. BNK1) kann also für zwei verschiedene Delivery-Contracts auch verschiedene Inhalte haben. Ferner können für die verschiedenen Kommunikationswege unterschiedliche Versionen desselben Templates vorgehalten werden.

Ferner können zusätzliche Informationen abgelegt werden, die zur Unterscheidung innerhalb der Business-Logik oder die bei einer späteren Überprüfung der Logik gebraucht werden, wie die beiden wie folgt dargestellten möglichen Informationen:

### Unterscheidung bei Nachnahme-Paketen

Hier wird für Pakete mit gesetztem Nachnahme-Betrag ein anderes Template genutzt. Dieses Template enthält z.B. den Nachnahme-Betrag als Information für den Abholer.

Es gibt B2B-Prozesse, bei denen zwar ein Nachnahme-Betrag beim Paket vorliegt, dieser Betrag aber nicht an den Abholer übermittelt wird, da die Nachnahme z.B. durch eine Sammelrechnung abgerechnet wird.

### Überprüfen, ob Paket abgeholt wurde

Hier soll überprüft werden, ob sich ein Paket noch im Logistiksystem-Automaten befindet oder zwischenzeitlich abgeholt wurde. Dies ist insbesondere hilfreich, wenn Erinnerungs-Benachrichtigungen z.B. nach mehreren Tagen versendet werden.

Das *Paket*-Objekt muss eine Methode bereitstellen, die das Ablaufdatum zurück liefert, zu dem das Paket aus dem Paketautomaten entfernt wird. Dies wird benötigt, um Benachrichtigungen X Tage vor Ablauf übermitteln zu können. Sollte kein Ablaufdatum gesetzt sein, kann standardmäßig eine gewisse Anzahl an Kalendertagen angenommen werden.

### LogistikProvider DPAG (B2C-Fall)

Die folgende Tabelle definiert beispielhaft die zu sendenden Benachrichtigungen (Communication Requests) bei der Registrierung von Usern für einen LogistikProvider. Hierbei handelt es sich um die Zusteller, es werden keine Benachrichtigungen versendet.

| **Ereignis des Logistiksystems** | **Zu informierende Person (Empfanger, Vertreter, LP, LC)** | **Datum: Sofort, +X Tage, -X Tage (vor Ablauf)** | **Kommunikationsweg (Mail, SMS, User)** | **Template** | **Sonstiges** |
|---|---|---|---|---|---|
| Neuer User | --- | --- | --- | --- | |
| User geändert | --- | --- | --- | --- | |

### LogistikContractor Endkunde (B2C-Fall)

Die folgende Tabelle definiert beispielhaft die zu sendenden Benachrichtigungen (Communication Requests) bei der Registrierung von Usern für einen virtuellen LogistikContractor 'Endkunde'. Hier werden alle User zusammengefasst, die für den B2C-Fall registriert werden.

| **Ereignis des Logistiksystems** | **Zu informierende Person (Empfanger, Vertreter, LP, LC)** | **Datum: Sofort, +X Tage, -X Tage (vor Ablauf)** | **Kommunikationsweg (Mail, SMS, User)** | **Template** | **Sonstiges** |
|---|---|---|---|---|---|
| Neuer User | Empfänger | Sofort | User | BNK1 | Keine SMS in der Nacht |
| User geändert | Empfänger | Sofort | User | BNK2 | Keine SMS in der Nacht |

### Delivery Contract-Logik -> Endkunde (B2C-Fall)

Für die B2C-Logik zwischen einem Logistikprovider und den Endkunden definiert die folgende Tabelle beispielhaft die zu versendenden Benachrichtigungen (Communication Requests):

| **Ereignis des Logistiksystems** | **Zu informierende Person (Empfanger, Vertreter, LP, LC)** | **Datum: Sofort, +X Tage, -X Tage (vor Ablauf)** | **Kommunikationsweg (Mail, SMS, User)** | **Template** | **Sonstiges** |
|---|---|---|---|---|---|
| Paket eingeliefert | Empfänger | Sofort | User | BNK3, BNK34N | Unterscheidbei Nachnal Paketen Überprüfen Paket abgel wurde Keine SMS : der Nacht |
| | Empfänger | +2 Tage | User | BNK4, BNK4N | |
| | Empfänger | -2 Tage | User | BNK5, BNK5N | Unterscheic bei Nachnal Paketen Überprüfen Paket abgel wurde Keine SMS : der Nacht |
| Paket abgeholt | --- | --- | --- | --- | |
| Paket zurück | --- | --- | --- | --- | |
| Vertreter gesetzt | --- | --- | --- | --- | |
| Vertreter entfernt | --- | --- | --- | --- | |

### LogistikProvider LP (B2B-Fall)

| **Ereignis des Logistiksystems** | **Zu informierende Person (Empfanger, Vertreter, LP, LC)** | **Datum: Sofort, +X Tage, -X Tage (vor Ablauf)** | **Kommunikationsweg (Mail, SMS, User)** | **Template** | **Sonstiges** |
|---|---|---|---|---|---|
| Neuer User | --- | --- | --- | --- | |
| User geändert | --- | --- | --- | --- | |

### LogistikContractor LC (B2B-Fall)

| **Ereignis des Logistiksystems** | **Zu informierende Person (Empfanger, Vertreter, LP, LC)** | **Datum: Sofort, +X Tage, -X Tage (vor Ablauf)** | **Kommunikationsweg (Mail, SMS, User)** | **Template** | **Sonstiges** |
|---|---|---|---|---|---|
| Neuer User | Empfänger | Sofort | User | BNK1 | SMS auch nacht |
| | Disponent | Sofort | User | ??? | SMS auch nacht |
| User geändert | Empfänger | Sofort | User | BNK2 | SMS auch nacht |
| | Disponent | Sofort | User | ??? | SMS auch nacht |

### DeliveryContract-Logik LP -> LC (B2B-Fall)

| **Ereignis des Logistiksystems** | **Zu informierende Person (Empfanger, Vertreter, LP, LC)** | **Datum: Sofort, +X Tage, -X Tage (vor Ablauf)** | **Kommunikationsweg (Mail, SMS, User)** | **Template** | **Sonstiges** |
|---|---|---|---|---|---|
| Paket eingeliefert | Empfänger | Sofort | User | BNK3 | Überprüfen, ob Paket abgeholt wurde SMS auch nacht |
| | Disponenten des Empfängers | +4 Tage | User | ??? | Überprüfen, o Paket abgeholt wurde SMS auch nacht |
| Paket abgeholt | --- | --- | --- | --- | |
| Paket zurück | --- | --- | --- | --- | |
| Vertreter gesetzt | Vertreter | sofort | User | BNK3 | Überprüfen, o Paket abgeholt wurde SMS auch nach |
| Vertreter entfernt | --- | --- | --- | --- | |

### CommunicationRequest-Queue

Es wird eine eigene Datenbank-Tabelle benötigt, in der Aufträge für zu sendende Benachrichtigungen (Communication Requests) zwischengespeichert werden. Die Tabelle soll vorzugsweise nur der Verwaltung der Queue dienen, konkrete Informationen zu Paketen und Empfängern werden beispielsweise jeweils immer aus der Kundendatenbank 70 oder Paketdatenbank 80 gelesen.

| **Feld** | **Beschreibung** | **Typ** | **Beispiel** |
|---|---|---|---|
| Interne Felder, die zur Durchführung der Versendung benötigt werden | | | |
| RequestID | Eindeutiger Schlüssel zur Identifizierung der Einträge, wird intern fortlaufend generiert | NUMBER(16 ) PRIMARY KEY | |
| InsertDate | Datum des Einfügens in die Queue, wird intern generiert | DATE | |
| Completion Date | Datum der vollständigen Bearbeitung (Status = 2) bzw. des Fehlschlagens (Status = 9) | DATE | |
| RetryCount | Anzahl der fehlgeschlagenen vorherigen Versuche | NUMBER(3) | |
| State | Status des Requests | NUMBER(3) | 1 = neu 2 = bearbeitet (fertig) 3 = in Bearbeitung (gelockt) 9 = fehlerhaft |
| Von außen vorgegebene Felder, diese werden liefert von der B2B-Komponente geliefert | | | |
| SendDate | Datum und Uhrzeit, nach dem versendet werden soll | DATE | |
| RecipientID | ID des Empfängers, dies kann ein User, ein Logistik-Provider oder ein Logistk-Contractor sein. | VARCHAR(1 6) | LP_4711, LC_1234 US_0815 |
| ParcelD | Paketnummer (kann leer sein) | VARCHAR(16) | |
| Communication Flags | Parameter zur Steuerung der Versendung, werden durch die B2B-Komponente gesetzt, um bei späteren Nachfragen die getroffenen Entscheidungen in der Mandantenlogik nachvollziehen zu können. | NUMBER(8) | CheckParcelInMacl ine DelaySMSSending |
| Von außen vorgegebene Felder, die das zu nutzende Template identifizieren | | | |
| Contract | ID des Delivery-Contracts, des LogistikPartners oder Logistik-Providers | VARCHAR(1 6) | LC_4711, LP_4712 DC_4713 |
| CommType | Kommunikationsweg | VARCHAR(1 2) | SMS, PlainText, User ( = Einstellungen der Benutzers nehmen später evt. HTMLMail, RFC1149, Pager, FAX |
| Notification | Name des zu nutzenden Templates, siehe Abschnitt 0 | VARCHAR(1 2) | BNK1, BNK2, BNK3 ... |
| Lang | Sprache | VARCHAR(5 ) | de-DE, en-US, User |

Es kann jedoch zweckmäßig sein, die Felder der Communication-Request-Queue zu erweitern. Beispielsweise können Automatennummern und Freitextbeschreibungen aufgenommen werden. Dadurch sind Benachrichtigungen nicht ausschließlich an Pakete gekoppelt, sondern gegebenenfalls auch an Kombinationen von Postnummern, Ereignissen und Automatennummern. Ferner besteht die Möglichkeit, dynamisch Benachrichtigungen zu generieren.

Beim *Comm_Type*-Eintrag kann über einen Wert *User* vorgegeben werden, dass die Benachrichtigung über die vom Benutzer vorgegeben Kommunikationswege erfolgen soll. Analog kann für die Spracheinstellung *Lang* der Wert *User* eingetragen werden, wenn die Einstellungen des Users genutzt werden sollen. Ob und inwieweit ein Logging eines Eintrags (Status=3) nötig ist, hängt von der konkreten Implementierung ab.

### Zugriff auf Datenbanken

Es muss Zugriff auf die folgenden Datenbanken des Logistiksystems bereitgestellt werden:
- Kundendatenbank liefert Informationen zu einem Kunden, identifiziert durch die Kundennummer
- LogistikProviderdatenbank liefert Informationen zu einem Logistik-Provider.
- LogistikContractordatenbank liefert Informationen zu einem Logistik-Contractor.
- DeliveryContractdatenbank liefert Informationen zu einem Logistik-Contractor.
- Paketdatenbank liefert Informationen zu einem Paket, identifiziert durch eine eindeutige Paketnummer.
- Automaten-Datenbank liefert Informationen über den Standort eines Automaten, identifiziert durch die Automaten-ID.

### Ablauf einer Benachrichtigungs-Versendung

### Timer

Die Benachrichtigungskomponente überprüft regelmäßig alle Aufträge in der Communication-Queue 40. Dies wird durch einen Timer 41 innerhalb der Benachrichtigungskomponente ausgelöst. Das Timer-Intervall ist vorzugsweise frei konfigurierbar.

### Communication-Queue-Reader

Mit Aufruf der Timer-Funktion werden alle Einträge aus der CommunicationRequest-Queue 40 gelesen, deren Sendedatum hinter dem Tagesdatum liegt.

```
    Select * from Communication_Request_queue
       where State = 1                         // noch nicht
    bearbeitet
       and SendDate < now() ;                 // und jetzt
    aktuell
```

### Rekonstruktion der Objekte

Jeder gelesene Eintrag aus der Queue wird in ein *Communication Request*-Objekt umgewandelt. Anhand der eindeutigen ID für den zu informierenden Benutzer (RecipientID) und der ID für das Paket (ParcelID) werden die entsprechenden Teil-Objekte rekonstruiert. Dies ist notwendig, um die aktuellen Daten der Objekte wie z.B. die Mail-Adresse abfragen zu können.

Mit *Benutzer* ist in diesem Fall entweder ein *User,* ein *LogistikProvider*- oder *LogistikContractor*-Objekt gemeint. Alle diese Objekte implementieren ein gemeinsames Interface *Notifyable.* Dies stellt die benötigten Methoden bereit zur Sendung einer Benachrichtigung an das entsprechende Objekt. Das *Paket*-Objekt kann eventuell entfallen, wenn z.B. eine Benachrichtigung unabhängig von einer Paketlieferung versendet werden soll, z.B. bei einer Kundenregistrierung.

Das *Paket*-Objekt stellt wiederum eine Methode bereit, mittels der auf den Automaten zugegriffen werden kann, in dem das Paket liegt.

Die gelesenen Daten der Objekte sind zum einen zu übermittelnde Daten (wie Name, Anschrift, Standort der Paketautomaten) als auch Steuerungsdaten (wie Mail und/oder SMS, Mail-Adresse).

### Logik-Überprüfung

Die aus der Queue 40 ausgelesenen Communication Requests werden gegen die B2B DeliveryContract-Logik 20 geprüft, ob sie noch immer gültige Benachrichtigungen sind. Wird nur eine einzige Überprüfung vorgenommen, muss gegen die Daten aus der Paketdatenbank 80 sichergestellt werden, dass das Paket noch nicht abgeholt wurde. Wurde das Paket in der Zwischenzeit abgeholt, wird die Benachrichtigung als 'erledigt' betrachtet. Hierzu wird der Status des Communication Requests aus der internen Queue der noch zu bearbeitenden Aufträge entfernt (der Status wird auf 2 = *fertig bearbeitet* gesetzt).

Falls das Paket in der Paketdatenbank 80 nicht mehr existiert, wird davon ausgegangen, das es zwischenzeitlich abgeholt wurde, der Communication Request wird ebenfalls aus der internen Liste der noch zu bearbeitenden Aufträge entfernt.

### Zentrale Versendekomponente

Die Benachrichtigungen werden an die zentrale Versendekomponente 30 übergeben. Dort wird anhand des im Communication Request angegebenen Kommunikationsweges und den Einstellungen des Benutzers festgelegt, auf welchem Kommunikationsweg die Benachrichtigung zugestellt werden soll. Hierbei kann es eventuell zu einem Fehler kommen, wenn durch die Business Logic ein bestimmter Kommunikationsweg vorgegeben wird, der Benutzer aber diesen Kommunikationsweg nicht unterstützt.

Falls nur ein Kommunikationsweg gewünscht wird, wird direkt das gewünschte SPI (Service Provider Interfaces) aufgerufen. Falls der Benutzer eine Benachrichtigung über mehrere Kommunikationswege wünscht, müssen Vorkehrungen getroffen werden, dass die Benachrichtigung über den ersten Kommunikationsweg erfolgreich ist, aber nicht über den zweiten. Dann muss dieser zweite Kommunikationsweg wiederholt versucht werden, ohne dass der erste Kommunikationsweg erneut verwendet wird. Hierzu wird am günstigsten für jeden gewünschten Kommunikationsweg ein Duplikat des *Communication Request* Objekts angelegt, das dann an das entsprechende SPI übergeben wird.

### Versendung über einzelne Kommunikatonswege

Die einzelnen Kommunikations-Wege werden über sogenannte SPI's (Service Provider Interfaces) abgebildet. Für jeden Kommunikationsweg gibt es ein solches SPI. Jedes SPI wird mit dem Communication Request-Objekt aufgerufen. In Abhängigkeit der Daten in diesem Objekt wird eine Mail und/oder SMS erstellt. Dazu wird das passende Template 110 eingelesen, und die Platzhalter werden durch die aus der entsprechenden Datenbank gelesenen Informationen ersetzt.

### Verzögern der Versendung

Eine mögliche gewünschte Einschränkung des Versendens von Benachrichtigungen ist es, die Abarbeitung während der Nacht (z.B. 22:00 - 8:00) entweder ganz oder nur für SMS-Benachrichtigungen zu unterbinden. Sollte eine komplette Einstellung des Versands gewünscht werden, kann dies z.B. über den Timer realisiert werden. Da Mails allerdings keine Störungen auslösen, ist es günstiger, nur den Versand von SMS während der Nacht zu unterbinden. Hierzu wird innerhalb des SMS-SPI's die Versendung abgebrochen und das Sende-Datum auf den nächsten passenden Termin innerhalb des Zeitfensters gesetzt. Mit dem ersten Timer-Durchlauf innerhalb dieses Zeitfensters wird der Communication Request erneut gelesen und ausgeführt.

### Plausibilitäts-Prüfungen

Die Benachrichtigungs-Komponente führt eine Plausibilitäts-Prüfung der zu übermittelnden Daten durch. Der Kunde muss in der Kundendatenbank 70 und das Paket in der Paketdatenbank 80 existieren. Ist ein Kunde beispielsweise bereits gelöscht, wird keine Benachrichtigung mehr versendet. Ferner müssen Informationen zum Paketautomaten (Standort) vorliegen. Es wird überprüft, ob die Empfänger-Adresse (eMail oder Handy-Nummer) potenziell korrekt ist, und ob alle Platzhalter des Templates 110 mit Daten gefüllt werden können. Ferner müssen die existierenden Templates gewisse Plausibilitäten aufweisen: in Abhängigkeit des Template-Typs (dieser variiert wiederum in der Sprache, dem Kommunikationsweg und der B2B-Logik) müssen in den Templates folgende wichtige Datenfelder vorhanden sein:

| **Template** | **Bemerkung** | **benötigte Platzhalter im Template** |
|---|---|---|
| BNK1 | neuer Kunde | keine |
| BNK2 | Kundendaten geändert | keine |
| BNK3, BNK4, BNK5 | Paket wartet | >AUT_Street<, >AUT_ZipCode<, >AUT_City< |
| BNK3N, BNK4N, BNK5N | Nachnahme-Paket wartet | >AUT_Street<, >AUT_ZipCode<, >AUT_City< >POD_Amount< |

Sollte ein Template nicht vorhanden sein oder keine entsprechenden Einträge aufweisen, wird der Versand unterbrochen und eine entsprechende Fehlermeldung in eine LOG-Datei generiert. Die Templates sollten überprüft werden. Falls ein Versand per SMS erfolgt, kann ein intelligenter Mechanismus die Nachrichten auf eine maximale Länge von 160 Zeichen bringen.

### Durchführen der Versendung

Mit dem im Abschnitt *Template-Mechanismus* beschriebenen Mechanismus wird der zu versendende Text generiert. Der Text und die Empfänger-Informationen werden in Abhängigkeit vom Versand-Typ an ein Mail- oder SMS-Gateway 120 übermittelt. Sollte die Übermittlung zum Gateway fehlschlagen, kann eine sofortige zweite Übermittlung versucht werden, um kurzfristige Ausfälle leichter überbrücken zu können.

### Ablegen des Ergebnisses

Falls der gesamte Vorgang erfolgreich war, wird der Eintrag aus der Queue der ausstehenden Aufträge in einem besonders bevorzugten Ausführungsbeispiel der Erfindung gelöscht, indem das Feld *State* auf '2' gesetzt wird. Gleichzeitig wird das Feld *CompletionDate* auf das aktuelle Datum + Uhrzeit gesetzt. Solche Einträge in der Communication-Queue 40 werden nicht weiter bearbeitet. Sie sollten zweckmäßigerweise eine gewisse Zeit in der Communication-Queue verfügbar bleiben, falls sich eine Benachrichtigung als unzustellbar herausstellt.

Ein Fehler kann aus mehreren Gründen aufgetreten sein:
- Der Kunde ist nicht in der Kundendatenbank 70 bzw. der Automat ist nicht in der Automatendatenbank 90.
- Die gelesenen Daten sind nicht plausibel (z.B. nicht vollständig gefüllt)
- Die Templates sind fehlerhaft bzw. nicht vorhanden.
- Ein Versenden der Benachrichtigung ist aus technischen Gründen nicht möglich (nach mehreren Versuchen).

Falls ein Fehler auftritt, wird das Feld 'RetryCount' erhöht. Hat der RetryCount einen vordefinierten Wert überschritten (dies ist auch abhängig von der Frequenz des Timers), wird eine Fehlermeldung in einer LOG-Datei generiert und beispielsweise eine manuelle Nachbearbeitung angestoßen. Dies kann z.B. das Überprüfen der hinterlegten Daten sein oder das manuelle Entfernen von Einträgen aus der Communication-Queue. Um zu vermeiden, dass diese fehlerhafte Benachrichtigung immer wieder versucht wird, wird der Status auf '9' gesetzt, sobald ein gewisser RetryCount erreicht wurde. Diese Benachrichtigungen werden nicht bearbeitet. Außerdem wird das aktuelle Datum als Datum des Abbruchs im Feld *CompletionDate* abgelegt. Nach Beseitigung des Fehlers muss der Status manuell wieder auf '1' gesetzt werden. Das *CompletionDate* und der *RetryCount* müssen ebenfalls zurückgesetzt werden.

### Regelmäßiges Aufräumen

Regelmäßiges 'Aufräumen' der Communication-Request-Queue ist erforderlich. Alle erledigten Fälle, die länger als eine bestimmte Zeitspanne (z.B. eine Woche) erledigt sind, sollten aus der Datenbank entfernt werden. Ferner sollten alle Fehler-Fälle, die älter als einen Monat sind, aus der Communication Request Queue entfernt werden. Das Datum der Fertigstellung bzw. des Abbruchs wird im Feld *CompletionDate* abgelegt. Beispielhaft wird also ausgeführt:
Delete from Communication_queue
   where State = 2 and completion_date < now + 7 days
   or State = 9 and completion_date < now + 30 days

### Logging Mechanismus

Fehler beim Versenden von Mails oder SMS sollten in einer Fehler-LOG-Datei mitgeloggt werden. Diese LOG-Dateien müssen regelmäßig überwacht werden, um z.B. den Ausfall eines Gateways feststellen zu können. Ferner sollen zumindest in der ersten Phase sämtliche versandten Benachrichtigungen ebenfalls mitgeloggt werden. Hierzu wird eine eigene LOG-Datei verwendet, um die Fehlerüberwachung zu vereinfachen.

### Designvorschläge und Einschränkungen

Für die Realisierung des Timers gibt es mehrere Alternativen. Sie kann
- über die internen Timer des Application Servers,
- über einen cron-Job,
- über einen Datenbank-Timer oder
- eine anderweitig entwickelte Lösung erfolgen.

Die erste Variante wird bevorzugt. Es sind auch mehrere Alternativen für die Anbindung des Mail- und SMS-Versands möglich:
- JMAPI (Java Message API)
- JMS
- Nutzung eines geeigneten Mail-Dienstes des Application-Server

Hier sind die beiden ersten Varianten bevorzugt.

### Layout

Die Benachrichtigungs-Komponente muss keinerlei Oberflächen oder Internet-Seiten umfassen. Allerdings sind für die einzelnen Benachrichtigungen verschiedene Templates erforderlich. Es ist dabei von Vorteil, wenn die Templates leicht austauschbar sind. Die in den folgenden Abschnitten angegebenen Templates stellen lediglich beispielhafte Ausführungsbeispiele dar. Es können selbstverständlich jegliche gewünschte Benachrichtigungstexte mit dementsprechenden Platzhaltern integriert werden.
***BNK1 = Bestätigung der Registrierung***

### Benachrichtigung per Mail

| |
|---|
| Willkommen bei Packstation |
| Hallo >M_Adresse< >M_SurName<. |
| Sie haben sich bei Packstation registriert mit den fol- |
| genden Daten: |
| >M_Adresse< >M_FirstName< >M_SurName< |
| >M_Street< |
| >M_ZipCode< >M_City< |
| Mail: >M_Mail< |
| SMS: >M_SMS< |
| Ihre Mitgliedsnummer ist >M_NR< |

### Benachrichtigung per SMS

| |
|---|
| Willkommen bei Packstation. Ihre Mitgliedsnummer ist >M_NR< |

***BNK2* = *Bestätigung der Änderung von* Kundendaten**

### Benachrichtigung per Mail

| |
|---|
| Änderung Ihrer Adress-Daten bei Packstation |
| |
| Hallo >M_Adresse< >M_SurName<. |
| Sie haben ihre bei Packstation hinterlegten Daten geän- |
| dert auf: |
| >M_Adresse< >M_FirstName< >M_SurName< |
| >M_Street< |
| >M_ZipCode< >M_City< |
| Mail: >M_Mail< |
| SMS: >M_SMS< |
| Ihre Mitgliedsnummer ist >M_NR< |

### Benachrichtigung per SMS

| |
|---|
| Hallo >M_Adresse< >M_SurName<. Ihre hinterlegten Packstation-Daten wurden geändert auf: >M_Street<, >M_ZipCode< >M_City< |

***BNK3 = Benachrichtigung 'Neues* Paket'**

### Benachrichtigung per Mail

| |
|---|
| Ein neues Packstation-Paket ist für Sie da |
| |
| Hallo >M_Adresse< >M_SurName<. |
| Ein neues Paket wartet auf Sie im Packstation-Automaten >Aut_Street< in >Aut_ZipCode< >Aut_City< |
| Sie haben sieben Tage Zeit, das Paket abzuholen. Bitte denken Sie daran, ihre Kundenkarte und ihre PIN mitzubringen. |

### Benachrichtigung per SMS

| |
|---|
| Hallo >M_Adresse< >M_SurName<. Ein neues Paket wartet auf Sie im Packstation-Automaten >Aut_Street< in >Aut_ZipCode< >Aut_City< |

***BNK3N* = *Benachrichtigung 'Neues Paket mit Nachnahme*'**

### Benachrichtigung per Mail

| |
|---|
| Ein neues Packstation-Nachnahme-Paket ist für Sie da Hallo >M_Adresse< >M_SurName<. |
| Ein neues Nachnahme-Paket wartet auf Sie im Packstation-Automaten >Aut_Street< in >Aut_ZipCode< >Aut_City< Sie haben sieben Tage Zeit, das Paket abzuholen. Bitte denken Sie daran, ihre Kundenkarte und ihre PIN mitzubringen. Die Nachnahme-Gebühr beträgt >POD_Amount<. Sie können mit EC-Karte oder Geldkarte zahlen. |

### Benachrichtigung per SMS

| |
|---|
| Hallo >M_Adresse< >M_SurName<. Ein neues Nachnahme-Paket (>POD_Amount<) wartet auf Sie im Packstation-Automaten >Aut_Street< in >Aut_ZipCode< >Aut_City< |

***BNK4 = Benachrichtigung 'Paket wartet seit 48 Stunden'***

### Benachrichtigung per Mail

| |
|---|
| Ein Packstation-Paket wartet seit 48 Stunden auf Sie Hallo >M_Adresse< >M_SurName<. |
| Vielleicht haben Sie es vergessen: Ein Paket wartet auf Sie im Packstation-Automaten >Aut_Street< in >Aut_ZipCode< >Aut_City< |
| Sie haben jetzt noch fünf Tage Zeit, das Paket abzuholen. Bitte denken Sie daran, ihre Kundenkarte und ihre PIN mitzubringen. |

### Benachrichtigung per SMS

| |
|---|
| Hallo >M_Adresse< >M_SurName<. Ein Paket wartet seit 48 Stunden auf Sie im Packstation-Automaten >Aut_Street< in >Aut_ZipCode< >Aut_City< |

***BNK4N* = *Benachrichtigung 'Paket mit Nachnahme wartet seit 48 Stunden'***

### Benachrichtigung per Mail

| |
|---|
| Ein Packstation-Nachnahme-Paket wartet seit 48 Stunden auf Sie |
| Hallo >M_Adresse< >M_SurName<. |
| Vielleicht haben Sie es vergessen: Ein Nachnahme-Paket wartet auf Sie im Packstation-Automaten >Aut_Street< in >Aut_ZipCode< >Aut_City< |
| Sie haben jetzt noch fünf Tage Zeit, das Paket abzuholen. Bitte denken Sie daran, ihre Kundenkarte und ihre PIN mitzubringen. Die Nachnahme-Gebühr beträgt >POD_Amount<. Sie können mit EC-Karte oder Geldkarte zahlen. |

### Benachrichtigung per SMS

| |
|---|
| Hallo >M_Adresse< >M_SurName<. Ein Nachnahme-Paket (>POD_Amount<) wartet seit 48 Stunden auf Sie im Packstation-Automaten >Aut_Street< in >Aut_ZipCode< >Aut_City< |

***BNK5* = *Benachrichtigung 'Paket wird in 48 Stunden entfernt'***

### Benachrichtigung per Mail

| |
|---|
| Ein Packstation-Paket wartet auf Sie |
| |
| Hallo >M_Adresse< >M_SurName<. |
| Jetzt wird es aber Zeit: Ein Paket wartet auf Sie im Packstation-Automaten >Aut_Street< in >Aut_ZipCode< >Aut_City<. |
| Dieses Paket würde in 48 Stunden als unzustellbar zu-rückgesendet, falls Sie es nicht abholen. Bitte denken Sie daran, ihre Kundenkarte und ihre PIN mitzubringen. |

### Benachrichtigung per SMS

| |
|---|
| Hallo >M_Adresse< >M_SurName<. Ihr Paket im Pack-station-Automaten >Aut_Street< in >Aut_ZipCode< >Aut_City< wird in 48 Stunden zurückgesendet. |

***BNK5N* =** ***Benachrichtigung 'Paket mit Nachnahme wird in 48 Stunden entfernt'***

### Benachrichtigung per Mail

| |
|---|
| Ein Packstation-Nachnahme-Paket wartet auf Sie Hallo >M_Adresse< >M_SurName<. |
| Jetzt wird es aber Zeit: Ein Nachnahme-Paket wartet auf Sie im Packstation-Automaten >Aut_Street< in >Aut_ZipCode< >Aut_City<. |
| Dieses Paket würde in 48 Stunden als unzustellbar zu-rückgesendet, falls Sie es nicht abholen. Bitte denken Sie daran, ihre Kundenkarte und ihre PIN mitzubringen. Die Nachnahme-Gebühr beträgt >POD_Amount<. Sie können mit EC-Karte oder Geldkarte zahlen. |

### Benachrichtigung per SMS

| |
|---|
| Hallo >M_Adresse< >M_SurName<. Ihr Nachnahme-Paket (>POD_Amount<) im Packstation-Automaten >Aut_Street< in >Aut_ZipCode< >Aut_City< wird in 48 Stunden zurückgesendet. |

### Anforderungen an andere Komponenten

### Objekt Paket

Ein Objekt Paket muss bereitgestellt werden, das Informationen zu einem Paket, identifiziert durch eine eindeutige Paketnummer, liefert:
- Das Paket muss eine Methode bereitstellen, die das Ablaufdatum zurück liefert, zu dem das Paket aus dem Paketautomaten entfernt wird. Dies wird benötigt, um Benachrichtigungen X Tage vor Ablauf übermitteln zu können. Sollte kein Ablaufdatum gesetzt sein, kann beispielsweise standardmäßig eine bestimmte Anzahl von Kalendertagen (z.B. 9 Tage) angenommen werden.
- Über eine Methode muss das *DeliveryContract*-Objekt geliefert werden.
- Das Paket-Objekt stellt eine Methode bereit, mittels der auf den Automaten zugegriffen werden kann, in dem das Paket liegt.

### Object Machine

Das Objekt *Machine* erlaubt Zugriff auf die Automatendatenbank 90, identifiziert durch die Automaten-ID.
- Methoden in diesem Objekt müssen Informationen über den Standort eines Automaten liefern.

### Zu benachrichtigende Objekte (Notifyable-Objekte): User, LogistikProvider und LogistikContractor

Das Objekt *User* liefert Informationen zu einem Kunden, identifiziert durch die Kundennummer. Das Objekt *LogistikProvider* erlaubt Zugriff auf die LogistikProvider-Datenbank. Das Objekt *LogistikContractor* liefert Informationen zu einem Logistik-Contractor.
- Alle Objekte implementieren ein gemeinsames Interface *Notifyable.* Dies stellt die benötigten Methoden bereit zur Sendung einer Benachrichtigung an das entsprechende Objekt, z.B. zum Lesen der Email-Adresse oder der Anrede.
- Es muss möglich sein, ein *Notifyable*-Objekt über eine eindeutige ID zu identifizieren. Hierzu kann z.B. die ID des *Users, LogistikProvider-* bzw. *LogistikContractor-*Objekts konkateniert mit einer Identifikation des Objekt-Typs (US_, LP_, LC_) über eine Methode *getUniqueID* zurückgegeben werden. Diese Methode sollte zweckmäßigerweise im Interface *Notifyable* definiert sein.
- Um ein über diese ID identifiziertes *Notifyable*-Objekt wieder zu rekonstruieren, wird eine Object-Factory implementiert, die anhand einer solchen ID das entsprechende Objekt anlegt.

### Logik-Objekte DeliveryContract, LogistikProvider und LogistikContractor

- Die B2B-Logik ist bei allen Objekten, zum Beispiel über ein gemeinsames Interface, abzufragen.
- Ein solches Objekt ist über eine eindeutige ID zu identifizieren. Hierzu kann die ID des *Notifyable*-Objektes *(getUniqueID)* genutzt werden, die bereits für den *LogistikProvider* und *LogistikContractor* existiert. Eine entsprechende Methode sollte auch im *DeliveryContract* vorhanden sein, die dann die ID des Objektes konkateniert mit einer Identifikation des Objekt-Typs (DC_) zurückliefert.

*Zur weiteren Verbesserung der Verfahren kann es zweckmäßig sein, die nachfolgend vorgesehenen Maßnahmen einzeln oder zusammen durchzuführen:*
- Sämtliche Mails werden offline verschickt, indem sie in eine Communication-Queue eingetragen werden, aus der sie in regelmäßigen Abständen ausgelesen und verarbeitet werden.
- Die Implementierung kann die Unterstützung beliebiger (aber vorzugsweise fester) Sprachen unterstützen.
- Mails werden vorzugsweise als Plain Text übermittelt.

*Besonders bevorzugte Ausführungsformen der Erfindung sind jedoch:*
- Unterstützung von HTML-formatierter Mail.
- Dabei kann der Kunde bei der Registrierung auswählen, in welchem Format er Mails bekommen will (PlainText oder HTML). Beim Versenden werden entsprechend andere Templates angezogen.
- Multi-Lingualität
   Der Kunde kann seine bevorzugte Sprache bei der Registrierung auswählen. Beim Versenden werden entsprechend andere Templates angezogen.
- Unterstützung von Benachrichtigungen über den RFC1149-Standard
- Ferner kann ein Content Management System eingesetzt werden, um die Templates für Mail und SMS leichter verwalten zu können.

### Bezugszeichenliste

- 10: Externes Interface
- 20: Delivery Contract Logic
- 30: Zentrale Versendekomponente
- 40: Communication-Request-Queue
- 41: Timer
- 50: Queue Reader
- 70: Kundendatenbank
- 80: Paketdatenbank
- 90: Automatendatenbank
- 100: Vorlagendatenbank
- 110: Templates
- 120: Gateway

## Patentansprüche

1. Logistiksystem mit einer oder mehreren Paketfachanlagen und mit einem oder mehreren registrierten Nutzern, wobei das Logistiksystem Module mit Funktionen zur Erzeugung von Benachrichtigungsaufträgen, eine zentrale Versendekomponente (30), eine Communication Request Queue (40), eine Vorlagendatenbank (100) mit Templates (110) zur Erzeugung von individuellen Benachrichtigungen für den jeweiligen Nutzer, eine Kundendatenbank (70) mit Informationen zu Kunden, eine Paketdatenbank (80) mit Informationen zu Paketen, eine Automatendatenbank (90) mit Informationen zu Paketfachanlagen und ein Gateway (120) zur Versendung der Benachrichtigungen umfasst, wobei das Logistiksystem so eingerichtet ist, dass verschiedene Ereignisse innerhalb des Logistiksystems verschiedene Module mit zugehörigen Funktionen aufrufen, um Benachrichtigungsaufträge zu erzeugen, die entweder zum direkten Versenden an die Versendekomponente (30) oder zum zeitverzögerten Versenden in eine Communication Request Queue (40) geschrieben werden, wobei ein Queue Reader (50) die Benachrichtigungsaufträge timer-gesteuert aus der Communication Request Queue (40) ausliest und an die zentrale Versendekomponente (30) übermittelt, welche die entsprechenden benutzerspezifischen Benachrichtigungen erzeugt und diese über ein Gateway (120) an die Nutzer versendet, und wobei das Logistiksystem eine Delivery Contract Logic (20) aufweist, die den Status der Benachrichtigungsaufträge vor Übergabe an die zentrale Versendekomponente (30) validiert.

2. Logistiksystem nach Anspruch 1, **dadurch gekennzeichnet, dass** die Datenbanken so eingerichtet sind, dass die Zuordnung von Kundendaten, Paketdaten und Paketfachanlagendaten über IDs erfolgt.

3. Logistiksystem nach Anspruch 1 oder 2,
**dadurch gekennzeichnet, dass** es sich bei den Ereignissen innerhalb des Logistiksystems wenigstens um Folgende handelt:
- Registrierung eines neuen Nutzers
- Änderung der Nutzerdaten
- Deponierung eines neuen Pakets in einer Paketfachanlage
- Abholung eines Pakets aus einer Paketfachanlage
- Zurücksendung eines Pakets
- Setzung eines Vertreters für die Abholung eines Pakets
- Entfernung eines Vertreters.

## Claims

1. Logistic system comprising one or more parcel compartment systems with one or more registered users, wherein the logistic system comprises modules that each have functions for generating notification orders, a central sending component (30), a communication request queue (40), a document database (100) with templates (110) for generating individual notifications for the specific users, a client database (70) with information about clients, a parcel database (80) with information about parcels, an automatic parcel delivery machine database (90) with information about parcel compartment systems and a gateway (120) for sending the notifications, whereby the logistic system is equipped for different events within the logistic system calling up different modules with associated functions in order to generate notification orders which are either transferred to the central sending component (30) so that they can be sent immediately or else they are written into the communication request queue (40) so that they can be sent in a deferred manner, whereby the notification orders are read from the communication request queue (40) by means of a queue reader (50) in a timer-controlled manner and transmitted to the central sending component (30) which generates the appropriate user-specific notifications and sends them to the users via the gateway (120), whereby the logistic system further comprises a delivery contract logic (20), and before being transferred to the central sending component (30), the status of the notification orders is validated in said delivery contract logic (20).

2. Logistic system according to Claim 1, **characterized in that** the databases are equipped for allocating client data, parcel data and parcel compartment data by means of ID's.

3. Logistic system according to Claim 1 or 2, **characterized in that** the events in the logistic system comprise at least the following:
- registration of new user
- change in user data
- placement of a new parcel in a parcel compartment system
- picking up a parcel from a parcel compartment system
- sending back a parcel
- adding a substitute for pick-up of a parcel
- removing a substitute.

## Revendications

1. Système logistique comportant un ou plusieurs systèmes à compartiments pour paquets et un ou plusieurs utilisateurs enregistrés, le système logistique comprenant des modules avec des fonctions pour générer des ordres de notification, une composante d'expédition centrale (20), une file d'attente de requêtes de communication (Communication Request Queue) (40), une base de données de modèles (100) avec des modèles (Templates) (110) pour générer des notifications individuelles pour chaque utilisateur, une base de données de clients (70) avec des informations sur des clients, une base de données de paquets (80) avec des informations sur des paquets, une base de données d'automates (90) avec des informations sur des systèmes à compartiments pour paquets et une passerelle (120) pour expédier les notifications, le système logistique étant aménagé de manière telle que différents événements, au sein du système logistique, appellent différents modules avec des fonctions associées pour générer des ordres de notification qui sont écrits dans une file d'attente de requêtes de communication (Communication Request Queue) (40) soit pour être expédiés directement à la composante d'expédition (30) soit pour être expédiés avec un retard temporel, un lecteur de files d'attente (Queue Reader) (50) lisant les ordres de notification hors de la file d'attente de requêtes de communication (Communication Request Queue) (40) de manière commandée par une horloge et les transmettant à la composante d'expédition centrale (30) qui génère les notifications correspondantes spécifiques aux utilisateurs et les expédie aux utilisateurs via une passerelle (120), et le système logistique comportant une logique de contrats de livraison (Delivery Contract Logic) (20) qui valide le statut des ordres de notification avant le transfert à la composante d'expédition centrale (30).

2. Système logistique selon la revendication 1 ou 2, **caractérisé en ce que** bases de données sont aménagées de manière telle que l'affectation de données de clients, données de paquets et données de systèmes de compartiments pour paquets se fait par l'intermédiaire de ID.

3. Système logistique selon la revendication 1 ou 2, **caractérisé en ce que** les événements au sein du système logistique sont au moins les suivants:
- enregistrement d'un nouvel utilisateur,
- modification des données d'utilisateurs,
- dépôt d'un nouveau paquet dans un système à compartiments pour paquets,
- retrait d'un paquet au système à compartiments pour paquets,
- retour d'un paquet,
- désignation d'un représentant pour effectuer le retrait d'un paquet,
- suppression d'un représentant.
